# EUROPÄISCHE PATENTSCHRIFT

(11) **EP 3 908 777 B1**
(45) Veröffentlichungstag und Bekanntmachung des Hinweises auf die Patenterteilung: **14.12.2022**
(21) Anmeldenummer: 20700966.3
(22) Anmeldetag: 08.01.2020
(51) Int. Cl.: F16L 57/06, F16L 27/10, F16L 37/12, G21C 13/036, G21C 17/10, F16L 37/133

(54) **STABILISATORELEMENT FÜR EINE ROHRVERBINDUNG**
STABILIZER ELEMENT FOR A PIPE CONNECTION
ÉLÉMENT STABILISATEUR POUR UN RACCORD DE TUYAUX

(30) Priorität: 11.01.2019 DE 102019100627
(43) Veröffentlichungstag der Anmeldung: 17.11.2021
(73) Patentinhaber: Framatome GmbH, 91052 Erlangen (DE)
(72) Erfinder: PROBST, Christof, 90429 Nürnberg (DE); MÜLLER, Erhard, 91362 Pretzfeld (DE); MEIER-HYNEK, Konrad, 91074 Herzogenaurach (DE)
(74) Vertreter: Lavoix
(86) Internationale Anmeldenummer: PCT/EP2020/050248
(87) Internationale Veröffentlichungsnummer: WO 2020/144198

(56) Entgegenhaltungen:
- EP-A1- 2 923 130
- CH-A- 381 034
- GB-A- 515 549
- US-A- 3 414 299

## Beschreibung

Die Erfindung betrifft ein Stabilisatorelement für eine Rohrverbindung, bei der ein erstes Rohr in ein zweites Rohr gesteckt ist, welches einen Einführtrichter aufweist. Sie betrifft weiterhin eine Rohrverbindung mit einem derartigen Stabilisatorelement sowie ein Verfahren zur Stabilisierung einer Rohrverbindung, insbesondere bei einem Kernflussmessgehäuserohr in einem Kernkraftwerk.

Aus dem US 3 414 299 A ist ein Stabilisatorelement für eine Rohrverbindung bekannt. Bei dieser Rohrverbindung wird ein erstes Rohr in ein zweites Rohr, das einen Einführtrichter aufweist, gesteckt.

In einem Kernkraftwerk gibt es innerhalb des Reaktordruckbehälters üblicherweise ein Kernflussmessgehäuserohr, welches sich aus zumindest zwei einzelnen Rohren zusammensetzt, die im Verbindungsbereich mit geringem Radialspiel ineinandergesteckt sind. Um bei der Installation das Einführen des einen Rohrendes in das andere Rohrende zu erleichtern, weist das außenliegende Rohrende einen Einführtrichter auf.

Da das Kernflussmessgehäuserohr während des Reaktorbetriebes von Reaktorkühlmittel angeströmt wird, kann es aufgrund des Radialspiels im Verbindungsbereich der beiden Rohre zu unerwünschtem Schwingungsverschleiß (Fretting) kommen, welcher über einen längeren Zeitraum zu Folgeschäden, insbesondere an einer vom Kernflussmessgehäuserohr umschlossenen Messsonde führen kann.

Aufgabe der Erfindung ist es, diesen Verschleiß zu verhindern oder zumindest zu verringern, wobei das Lösungskonzept auch bei anderen Rohrverbindungen außerhalb des genannten technischen Gebiets anwendbar sein soll. Insbesondere soll eine Nachrüstung bestehender Rohrverbindungen möglich sein, ohne diese zerlegen zu müssen.

Diese Aufgabe wird erfindungsgemäß gelöst durch ein Stabilisatorelement für eine Rohrverbindung gemäß Anspruch 1.

Demnach ist ein Stabilisatorelement für eine Rohrverbindung vorgesehen, bei der ein erstes Rohr in ein zweites Rohr gesteckt ist, welches einen Einführtrichter aufweist. Das Stabilisatorelement weist einen Klemmring mit einer Mehrzahl von über seinen Umfang verteilten Spannkörpern auf, welche in der Montageendposition in einen Zwischenraum zwischen dem ersten Rohr und dem Einführtrichter eingreifen und das erste und das zweite Rohr entlang einer gemeinsamen Achse ausrichten und gegeneinander verspannen, und wobei der Klemmring aus mehreren miteinander verbindbaren Ringsegmenten, insbesondere aus zwei Halbschalen, zusammengesetzt ist.

Die Erfindung geht von der Überlegung aus, dass es zwar möglich wäre, die beiden Rohre im Verbindungsbereich hydraulisch zu verpressen. Dies hätte aber eine Kaltverfestigung zur Folge, die nach heutigen Sicherheitsstandards im nuklearen Umfeld unzulässig ist. Stattdessen wird durch die Erfindung eine einfach nachrüstbare Klemmlösung geschaffen, die eine dauerhafte Stabilisierung von strömungsangeregten Rohrleitungsverbindungen ermöglicht.

Dabei ist es vorteilhaft, wenn benachbarte Ringsegmente des Klemmrings an ihren Verbindungsflächen zueinander komplementäre Vor- und/oder Rücksprünge aufweisen, die ein selbstzentrierendes Zusammensetzen ermöglichen. Zweckmäßigerweise ist eine Verrieglung benachbarter Ringsemente des Klemmrings mittels federbelasteter Verriegelungsstifte vorgesehen.

In einer vorteilhaften Variante weist der Klemmring eine Mehrzahl von über seinen Umfang verteilten Rastelementen auf, die in der Montageendposition in zugehörige Rastaufnahmen im Einführtrichter eingreifen. Derartige Rastaufnahmen können, wenn sie nicht bereits vorhanden sind, in einem der Montage des Stabilisatorelementes vorangehenden Vorbereitungsschritt beispielsweise durch Bohren in den Einführtrichter eingebracht werden.

In einer alternativen Variante weist das Stabilisatorelement weiterhin einen ringförmigen Aufsatz auf, der sich in der Montageendposition am zweiten Rohr abstützt und den Einführtrichter und den Klemmring zumindest teilweise übergreift, wobei der Aufsatz aus mehreren miteinander verbindbaren Ringsegmenten, insbesondere aus zwei Halbschalen, zusammengesetzt ist. Diese Variante ermöglicht eine Fixierung des Klemmrings am Aufsatz. Dazu weist der Klemmring bevorzugt eine Mehrzahl von über seinen Umfang verteilten Rastelementen auf, die in der Montageendposition in zugehörige Rastaufnahmen im Aufsatz eingreifen. Die Rastaufnahmen können insbesondere als umlaufende Ringnut im Aufsatz ausgebildet sein.

Analog zum Klemmring weisen benachbarte Ringsegmente des Aufsatzes an ihren Verbindungsflächen vorteilhafterweise zueinander komplementäre Vor- und/oder Rücksprünge auf, die ein selbstzentrierendes Zusammensetzen ermöglichen. Auch hier ist bevorzugt eine Verrieglung benachbarter Ringsemente des Aufsatzes mittels federbelasteter Verriegelungsstifte vorgesehen.

Das jeweilige Rastelement ist bevorzugt als Festkörpergelenk ausgebildet, und der jeweilige Spannkörper ist bevorzugt zumindest abschnittsweise keilförmig ausgebildet.

Wie bereits erwähnt, betrifft ein bevorzugtes Anwendungsgebiet ein Kernkraftwerk mit einem Reaktordruckbehälter und mit einem im Reaktordruckbehälter angeordneten Kernflussmessgehäuserohr, welches aus zumindest zwei Rohren zusammengesetzt ist, die durch eine Rohrverbindung der beschriebenen Art miteinander verbunden und durch das erfindungsgemäße Stabilisatorelement vor Schwingungsverschleiß geschützt sind. Die Erfindung ist aber generell anwendbar bei allen Rohrverbindungen, bei der ein erstes Rohr in ein zweites Rohr gesteckt ist, welches einen Einführtrichter aufweist.

Wenn der Einführtrichter nicht von vornherein vorhanden ist, kann er vor der Montage des Stabilisatorelementes nachgerüstet werden. Es kann dazu beispielsweise eine kegelförmige oder anders geformte Rohrmanschette verwendet werden, die als Gegenlager für die Spannkörper des Klemmrings dient. Eine Funktion oder Zweckbestimmung als Einführhilfe ist dabei nicht unbedingt erforderlich.

Die Erfindung betrifft schließlich auch ein Verfahren zur Stabilisierung einer Rohrverbindung, bei der ein erstes Rohr in ein zweites Rohr gesteckt ist, welches einen Einführtrichter aufweist, mit Hilfe eines Stabilisatorelementes der beschriebenen Art, wobei separate Ringsegmente um das erste Rohr gelegt und anschließend miteinander zu einem geschlossenen Klemmring sowie ggf. zu einem ringförmigen Aufsatz verbunden werden, und wobei der Klemmring anschließend in axialer Richtung in einen Klemmsitz im Zwischenraum zwischen dem ersten Rohr und dem Einführtrichter geschoben wird.

Dabei ist es vorteilhaft, wenn am Klemmring angebrachte Rastelemente beim Verschieben des Klemmrings in den Klemmsitz in zugehörige Rastaufnahmen im Einführtrichter oder in einem den Einführtrichter übergreifenden Aufsatz einrasten, wodurch der Klemmring im Klemmsitz fixiert wird.

Mehrere Ausführungsbeispiele der Erfindung werden nachfolgend unter Bezugnahme auf die beigefügten Zeichnungen näher erläutert.

Es zeigen:
- FIG. 1: einen Längsschnitt durch einen Reaktordruckbehälter eines Kernkraftwerkes mit einem darin angeordneten Kernflussmessgehäuserohr, welches sich aus aus zwei Rohren zusammensetzt, die in einem Steckverbindungsbereich miteinander verbunden sind,
- FIG. 2: einen Längsschnitt durch den Steckverbindungsbereich gemäß FIG. 1, wobei die Steckverbindung durch ein Stabilisatorelement gegen Schwingungsverschleiß geschützt ist,
- FIG. 3: einzelne Bauteile des Stabilisatorelementes gemäß FIG. 2 vor dem Zusammensetzen,
- FIG. 4: eine perspektivische Ansicht der Rohrverbindung mit montiertem Stabilisatorelement,
- FIG. 5: eine Rohrverbindung mit einer alternativen Variante eines Stabilisatorelementes in perspektivischer Ansicht während der Montagephase,
- FIG. 6: eine zu FIG. 5 gehörende seitliche Draufsicht in drei verschiedenen Stadien während der Montage,
- FIG. 7: eine FIG. 6 entsprechende Schnittdarstellung,

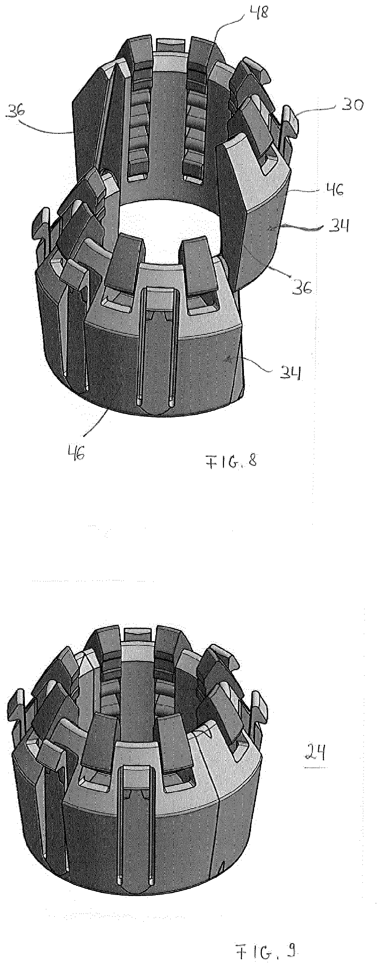

- FIG. 8: einen Klemmring des Stabilisatorelementes gemäß FIG. 5 vor dem Zusammensetzen in perspektivischer Ansicht, und
- FIG. 9: den Klemmring gemäß FIG. 8 nach dem Zusammensetzen.

Gleiche oder gleichwirkende Teile sind in allen Figuren mit denselben Bezugszeichen versehen.

Im Folgenden verwendete Positionsangaben wie "oben" oder "unten" und entsprechende Richtungsgaben wie "vertikal" oder "horizontal" dienen der leichteren Verständlichkeit der Figurenbeschreibung, implizieren aber keine Beschränkung auf die dort gezeigte Einbaulage.

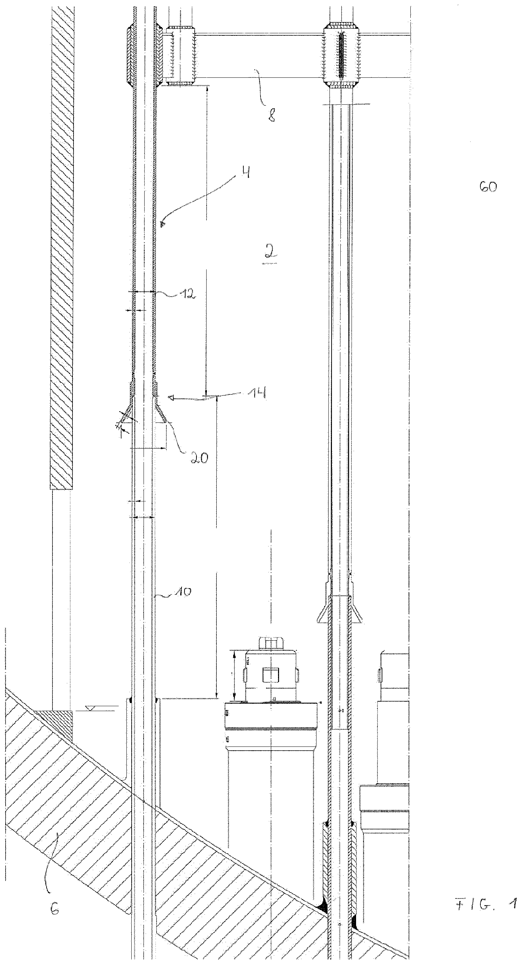

FIG. 1 zeigt ausschnittsweise einen Längsschnitt durch einen Reaktordruckbehälter 2 eines Kernkraftwerks 60. In dem Reaktordruckbehälter 2 sind mehrere sogenannte Kernflussmessgehäuserohre (KFMGR) 4 angeordnet, welche jeweils nach Art eines Führungsrohres eine nicht dargestellte Instrumentierungslanze zur Messung des Neutronenflusses im Kern aufnehmen. Das im Ausführungsbeispiel jeweils vertikal ausgerichtete KFMGR 4 ist in einem unteren Bereich druck- und mediendicht durch die Behälterwand 6 des Reaktordruckbehälters 2 geführt und wird in einem oberen Bereich durch zugehörige Halteelemente 8, die zusammen einen sogenannten KFMGR-Tragverband bilden, gestützt.

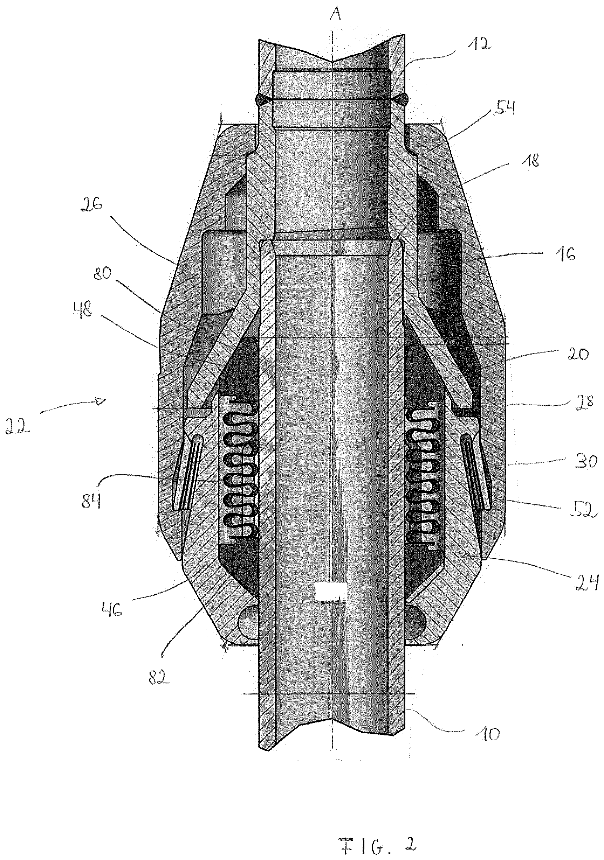

Das jeweilige KFMGR 2 umfasst zwei ursprünglich separate Rohre 10 und 12, die im Montageendzustand an dem Verbindungsabschnitt mit geringem radialem Spiel lose ineinandergesteckt sind (Passsitz). Konkret ist im Ausführungsbeispiel das untere Rohr 10 an seinem oberen Ende in das untere Ende des oberen Rohres 12 gesteckt. In dem derart ausgebildeten Steckverbindungsbereich 14 überlappen sich die Rohrenden in konzentrischer Weise, wobei ein geringer umlaufender Radialspalt 16 verbleibt. Dies ist in der vergrößerten Detaildarstellung in FIG. 2 gut zu erkennen. Zu diesem Zweck ist der Innendurchmesser des oberen Rohres 12 im Steckverbindungsbereich 14 etwas gegenüber dem Nennwert im restlichen Rohr 12 vergrößert, etwa indem die Rohrwand des oberen Rohres in diesem Bereich etwas nach außen gezogen ist und/oder die Wandstärke in diesem Bereich etwas verringert ist. Die dadurch im oberen Rohr 12 an dessen Innenwand ausgebildete Stufe 18 wirkt als axialer Endanschlag für das von unten hinein gesteckte untere Rohr 10. Durch die Ineinander-Schachtelung in diesem Bereich kann man auch davon sprechen, dass das eine Rohrende innen und das andere Rohrende außen liegt.

Um während der Montage das Hineinstecken des unteren Rohres 10 in das obere Rohr 12 zu erleichtern, ist ferner an das untere Ende des oberen Rohres 12 ein schräg nach außen abstehender Einführtrichter 20 oder kurz Trichter angeformt oder angefügt.

Während des Reaktorbetriebes wird die Steckverbindung des KFMGR 4 von Reaktorkühlmittel angeströmt, wodurch es zu Schwingungsanregungen kommt. Aufgrund des Radialspiels der Steckverbindung kommt es in diesem Bereich zu Schwingungsverschleiß (Fretting), welcher über einen längeren Zeitraum hinweg zu Schäden an der Rohrverbindung und an der vom KFMGR 4 umschlossenen Messsonde führen kann.

Um diesen Verschleiß zu reduzieren oder komplett zu verhindern, ist erfindungsgemäß ein Stabilisatorelement 22 vorgesehen, welches die beiden Rohre 10, 12 im Bereich der Steckverbindung in ihrer gemeinsamen Achse A fixiert.

In einer ersten Variante gemäß FIG. 2 bis 4 umfasst das Stabilisatorelement 22 zwei Hauptbaugruppen. Zum einen umfasst das Stabilisatorelement 22 einen Druck- oder Klemmring 24, der im Montageendzustand das untere Rohr 10 umgreift und dabei unter Ausbildung einer Klemmpassung in den Zwischenraum zwischen dem Einführtrichter 20 und dem unteren Rohr 10 eingrifft. Dadurch werden die beiden Rohre 10, 12 gegeneinander verspannt und in ihrer gemeinsamen Achse A fixiert. Zum anderen umfasst das Stabilisatorelement 22 einen ringförmigen Aufsatz 26, der im Montageendzustand das obere Rohr 12 umgreift und sich auf ihm abstützt. Nach unten hin erstreckt sich in diesem Zustand der Mantel 28 des Aufsatzes 26 über den Einführtrichter 20 und zumindest teilweise über den Klemmring 24 hinweg. Am Klemmring 24 angeordnete, seitlich abstehende Rastelemente 30 greifen im Montageendzustand in zugehörige Rastausnehmungen oder Rastlager im Mantel 28 des Aufsatzes 26 ein, wodurch beide Baugruppen dauerhaft miteinander verbunden und gegen axiale Verschiebung gesichert werden. Dadurch bildet der Aufsatz 26 eine Rastkupplung, die als formschlüssiges Gegenlager für den Klemmring 24 dient.

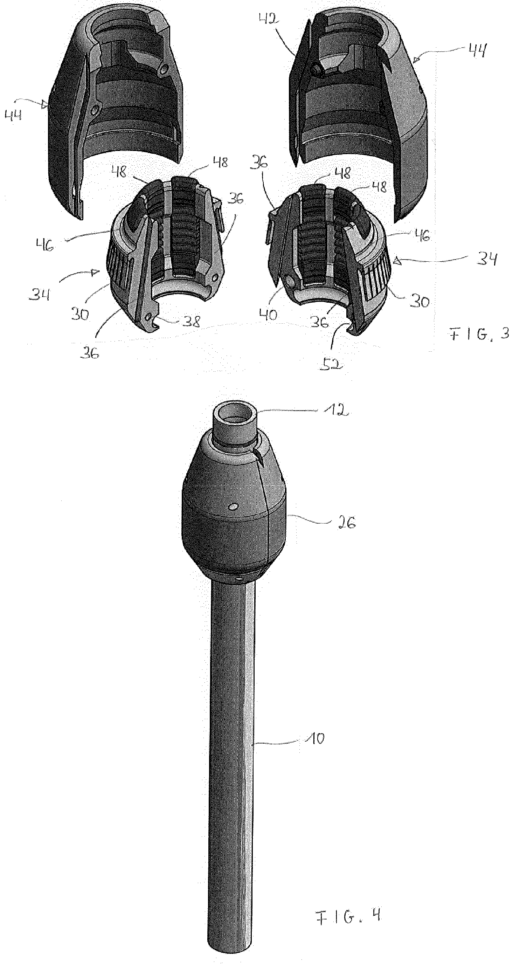

Um eine nachträgliche Montage des Stabilisatorelementes 22 an einem KFMGR 4 zu ermöglichen, ohne die bestehende Verbindung der beiden Rohre 10, 12 lösen zu müssen, setzt sich der Klemmring 24 aus mehreren ringsegmentförmigen Teilschalen zusammen, vorzugsweise zwei Halbschalen 34 gemäß FIG. 3, welche sich zu einem geschlossenen Ring zusammenfügen lassen. Dazu weist jede der beiden Halbschalen 34 zwei Stirnflächen 36 mit vorzugsweise keilförmigen Vor- oder Rücksprüngen auf, die komplementär zu entsprechenden Vor- oder Rücksprüngen des jeweils anderen Verbindungspartners ausgestaltet sind. Man bezeichnet diese Ausgestaltung auch als Schwalbenschwanzführung. Sie bewirkt, dass die beiden Halbschalen 34 nach dem Zusammensetzen gegen eine Verschiebung relativ zueinander gesichert sind. Zumindest ein aus der Stirnfläche 36 der einen Halbschale 34 heraustretender angefederter Verbindungs- oder Verriegelungsstift 38 greift beim Zusammensetzen in eine zugehörige Ausnehmung 40 in der Stirnfläche 36 der anderen Halbschale 34 ein und bewirkt dadurch eine Verriegelung. Bevorzugt ist für jedes Paar miteinander verbundener Stirnflächen 36 zumindest eine solche Verriegelung vorgesehen. Eine Verallgemeinerung des Konstruktionsprinzips auf mehr als zwei Teilschalen ist unmittelbar einsichtig.

Obige Ausführung gelten ganz analog für den als Rastkupplung wirksamen Aufsatz 26, der bevorzugt ebenfalls aus zwei miteinander mittels Verrieglungsstiften 42 verriegelbaren Halbschalen 44 zusammengesetzt ist.

Wie anhand von FIG. 2 und 3 ersichtlich ist, weist die jeweilige Halbschale 34 des Klemmrings 24 einen überwiegend starren Grundkörper 46 auf, in den - über den Umfang verteilt - ein oder mehrere nach oben herausstehende federnde Spannkörper 48 eingesetzt sind. Im Montageendzustand gemäß FIG. 2 stützen sich die beiden Grundkörper 46 des zusammengesetzten Klemmrings 24 mit Klemmpassung am unteren Rohr 10 ab. Die Spannkörper 48 greifen in den Zwischenraum zwischen dem Einführtrichter 20 und dem unteren Rohr 10 ein und verspannen diese Komponenten gegeneinander, wodurch das zuvor vorhandene Radialspiel unterdrückt wird.

Der jeweilige Spannkörper 48 kann wie hier gezeigt ein keilförmiges Oberteil 80 und ein keilförmiges Unterteil 82 aufweisen, wobei sich das Unterteil 82 am Grundkörper 46 abstützt. Das Oberteil 80 und das Unterteil 82 sind hier im Ausführungsbeispiel durch ein gewelltes oder ziehharmonikaförmiges Mittelteil 84 miteinander verbunden, welches die Funktion einer Druckfeder übernimmt und im Montageendzustand das Oberteil 48 nach oben in Richtung Einführtrichter 20 drückt.

Des Weiteren weist der jeweilige Grundkörper 46 des Klemmrings 24 ein oder mehrere seitlich abstehende Rastelemente 30 auf, bevorzugt in Gestalt von radial angeordneten hakenförmigen Festkörpergelenken. Als Festkörpergelenk bezeichnet man einen Bereich eines Bauteils, welcher eine Relativbewegung zwischen zwei Starrkörperbereichen durch Biegung erlaubt. Die Funktion eines Gelenks wird durch einen Bereich verminderter Biegesteifigkeit relativ zu zwei angrenzenden Bereichen höherer Biegesteifigkeit erreicht, etwa durch eine verminderte Dicke im Biegebereich. Die Rastelemente 30 können beispielsweise an den Grundköper 46 angeformt sein.

Die den Rastelementen 30 des Klemmrings 24 zugeordneten Rastlager des Aufsatzes 26 können gemäß FIG. 2 beispielsweise als umlaufende Ringnut 52 an der Innenseite des Mantels 28 ausgebildet sein. Diesbezüglich sind verschiedene Abwandlungen möglich, etwa in Form von den Mantel 28 durchdringenden Rastausnehmungen oder dergleichen.

Der Aufsatz 26 ist bevorzugt derart ausgebildet, dass er am oberen Ende mit Klemmpassung am oberen Rohr 12 anliegt. Gemäß FIG. 2 stützt er sich an einem umlaufenden Absatz 54 an der Außenseite des Rohres 12 oberhalb des Einführtrichters 20 ab. Dieser Absatz 54 wirkt als Endanschlag, wenn der Aufsatz 26 bei der Montage nach unten geschoben wird. Denkbar ist aber auch ein Abstützen des Aufsatzes 26 direkt am Einführtrichter 20. Wie bereits erwähnt, übergreift der ringförmige Mantel 28 des Aufsatzes 26 in der Montageendposition nach unten hin den Einführtrichter 20 und zumindest teilweise den Klemmring 24 und bildet somit eine bevorzugt stromlinienförmige Haube um den Verbindungsbereich der beiden Rohre 10, 12 herum.

Bei der Montage werden die zwei Halbschalen 34 des Klemmrings 24 am entsprechenden Stutzen bzw. Rohrende unterhalb des Einführtrichters 20 eingebracht und durch die keilförmig angearbeitete Schwalbenschwanzführung vertikal zu einem Trägerbauteil verbunden. Die zwei Halbschalen 44 des als Rastkupplung wirksamen Aufsatzes 26 werden oberhalb des Einführtrichters 20 durch die keilförmig angearbeitete Schwalbenschwanzführung ebenfalls zu einem Trägerbauteil verbunden. Beide Baugruppen werden jeweils beim axialen (hier: vertikalen) Verschieben durch die in Umfangsrichtung (hier: horizontal) wirkende integrierte Verriegelung formschlüssig und unlösbar miteinander verbunden. Damit sind beide Baugruppen in sich gegen selbstständiges bzw. gegen unbeabsichtigtes Lösen gesichert.

Beim Zusammenschieben der beiden Baugruppen wird der Klemmring 24 vertikal nach oben in den Einführtrichter 20 gedrückt. Dabei baut sich durch die federnden keilförmigen Spannkörper 48 eine Stabilisierungskraft auf, welche die beiden Rohrenden in ihrer gemeinsamen Achse A spielfrei ausrichtet und fixiert. Durch diesen vertikalen Hub rasten gleichzeitig die hakenförmigen Rastelemente 30 des Klemmrings 24 formschlüssig in die jeweiligen Rastöffnungen bzw. in die Ringnut 52 der Rastkupplung ein und halten dadurch die Stabilisierungskraft dauerhaft und unlösbar aufrecht. Der Montageendzustand ist in FIG. 4 perspektivisch dargestellt.

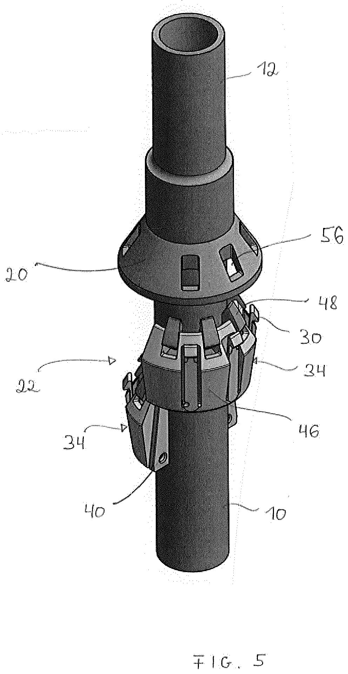

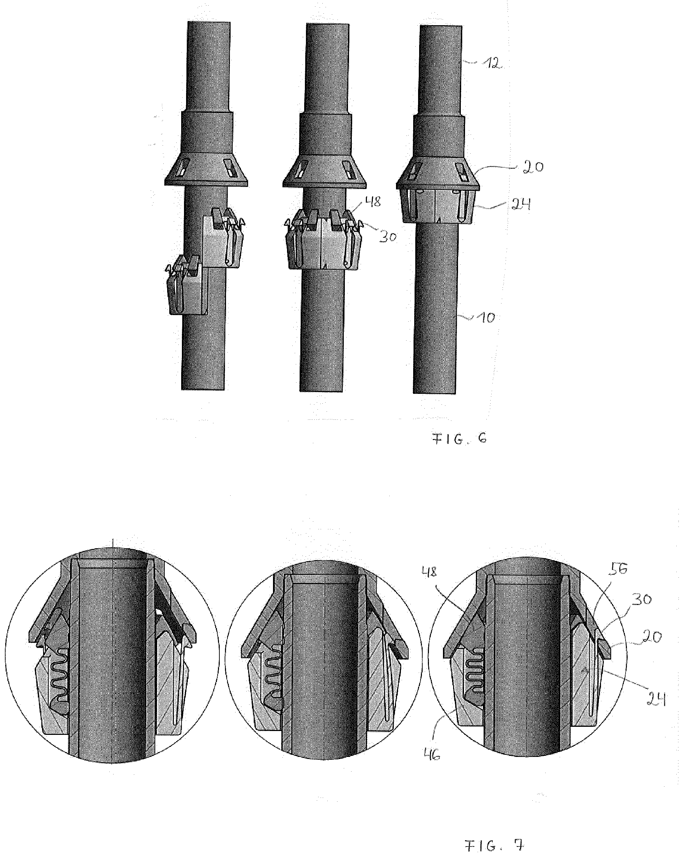

In FIG. 5 bis 7 ist eine weitere Variante des Stabilisatorelementes 22 dargestellt. Der wesentliche Unterschied zu der oben beschriebenen Variante besteht darin, dass hier auf den Aufsatz 26 verzichtet wird. Stattdessen greifen die Rastelemente 30 des Klemmrings 24 im Montageendzustand in Rastausnehmungen 56 ein, die zuvor - beispielsweise durch Bohren - direkt in den Einführtrichter 20 eingebracht wurden. Der Einführtrichter 20 selbst wirkt hier also als Rastkupplung, die nach der Ausbildung der Rastverbindung den Klemmring 2 in axialer Richtung fixiert. Die Formgebung der Rasthaken ist im Detail entsprechend angepasst. Ansonsten ist der Aufbau des Klemmrings 24 weitgehend gleich mit der zuvor beschriebenen Variante.

Wie bereits erwähnt, lässt sich das erfindungsgemäße Stabilisatorelement 22 bei einer bereits bestehenden Rohrverbindung nachrüsten, ohne diese auseinander zu nehmen. Die Montage kann mit einfachen Bewegungsabläufen erfolgen, da die einzelnen Bauteile lediglich grob in die Ausgangslage gebracht werden müssen und dann in selbstzentrierender Weise gegeneinander verschoben werden, bis die integrierten Verbindungelemente - Verriegelungsstifte 38, 42 und Rastelemente 30 - in die zugeordneten Aufnahmen einrasten. Ein Einsatz von Schraubendrehern ist nicht erforderlich. Damit kann die Handhabung und Montage des Stabilisatorelementes 22 im Reaktordruckbehälter 2 problemlos mit Hilfe von Fernhandhabungswerkzeugen unter Wasser erfolgen.

### Bezugszeichenliste

- 2: Reaktordruckbehälter
- 4: Kernflussmessgehäuserohr
- 6: Behälterwand
- 8: Halteelement
- 10: Rohr
- 12: Rohr
- 14: Steckverbindungsbereich
- 16: Radialspalt
- 18: Stufe
- 20: Einführtrichter
- 22: Stabilisatorelement
- 24: Klemmring
- 26: Aufsatz
- 28: Mantel
- 30: Rastelement
- 34: Halbschale
- 36: Stirnfläche
- 38: Verriegelungsstift
- 40: Ausnehmung
- 42: Verriegelungsstift
- 44: Halbschale
- 46: Grundkörper
- 48: Spannkörper
- 52: Ringnut
- 54: Absatz
- 56: Rastausnehmung
- 60: Kernkraftwerk
- 80: Oberteil
- 82: Unterteil
- 84: Mittelteil

## Patentansprüche

1. Stabilisatorelement (22) für eine Rohrverbindung, bei der ein erstes Rohr (10) in ein zweites Rohr (12) gesteckt ist, welches einen Einführtrichter (20) aufweist,
**dadurch gekennzeichnet, dass**
das Stabilisatorelement (22) einen Klemmring (24) mit einer Mehrzahl von über seinen Umfang verteilten Spannkörpern (48) aufweist, welche in der Montageendposition in einen Zwischenraum zwischen dem ersten Rohr (10) und dem Einführtrichter (20) eingreifen und das erste Rohr (10) und das zweite Rohr (12) gegeneinander verspannen, und der Klemmring (24) aus mehreren miteinander verbindbaren Ringsegmenten, insbesondere aus zwei Halbschalen (34), zusammengesetzt ist.

2. Stabilisatorelement (22) nach Anspruch 1, wobei benachbarte Ringsegmente des Klemmrings (24) an ihren Verbindungsflächen zueinander komplementäre Vor- und/oder Rücksprünge aufweisen, die ein selbstzentrierendes Zusammensetzen des Klemmrings (24) ermöglichen.

3. Stabilisatorelement (22) nach Anspruch 1 oder 2, wobei eine Verrieglung benachbarter Ringsemente des Klemmrings (24) mittels federbelasteter Verriegelungsstifte (38) vorgesehen ist.

4. Stabilisatorelement (22) nach einem der Ansprüche 1 bis 3, wobei der Klemmring (24) eine Mehrzahl von über seinen Umfang verteilten Rastelementen (30) aufweist, die in der Montageendposition in zugehörige Rastaufnahmen im Einführtrichter (20) eingreifen.

5. Stabilisatorelement (22) nach einem der Ansprüche 1 bis 3, welches weiterhin einen ringförmigen Aufsatz (26) aufweist, der sich in der Montageendposition am zweiten Rohr (12) abstützt und den Einführtrichter (20) und den Klemmring (24) zumindest teilweise übergreift, wobei der Aufsatz (26) aus mehreren miteinander verbindbaren Ringsegmenten, insbesondere aus zwei Halbschalen (44), zusammengesetzt ist.

6. Stabilisatorelement (22) nach Anspruch 5, wobei benachbarte Ringsegmente des Aufsatzes (26) an ihren Verbindungsflächen zueinander komplementäre Vor- und/oder Rücksprünge aufweisen, die ein selbstzentrierendes Zusammensetzen des Aufsatzes (26) ermöglichen.

7. Stabilisatorelement (22) nach Anspruch 5 oder 6, wobei eine Verrieglung benachbarter Ringsemente des Aufsatzes (26) mittels federbelasteter Verriegelungsstifte (42) vorgesehen ist.

8. Stabilisatorelement (22) nach einem der Ansprüche 5 bis 7, wobei der Klemmring (24) eine Mehrzahl von über seinen Umfang verteilten Rastelementen (30) aufweist, die in der Montageendposition in zugehörige Rastaufnahmen im Aufsatz (26) eingreifen.

9. Stabilisatorelement (22) nach Anspruch 8, wobei die Rastaufnahmen als umlaufende Ringnut (52) im Aufsatz (26) ausgebildet sind.

10. Stabilisatorelement (22) nach Anspruch 8 oder 9, wobei das jeweilige Rastelement (30) als Festkörpergelenk ausgebildet ist.

11. Stabilisatorelement (22) nach einem der Ansprüche 1 bis 10, wobei der jeweilige Spannkörper (48) keilförmig ausgebildet ist oder ein keilförmiges Oberteil (80) aufweist.

12. Rohrverbindung, bei der ein erstes Rohr (10) in ein zweites Rohr (12) gesteckt ist, welches einen Einführtrichter (20) aufweist, und wobei der Verbindungsbereich durch ein Stabilisatorelement (22) nach einem der Ansprüche 1 bis 11 stabilisiert ist.

13. Rohrverbindung nach Anspruch 12, bei der das erste Rohr (10) und das zweite Rohr (12) Bestandteile eines Kernflussmessgehäuserohres (4) für ein Kernkraftwerk (60) sind.

14. Kernkraftwerk (60) mit einem Reaktordruckbehälter (2) und mit einem im Reaktordruckbehälter (2) angeordneten Kernflussmessgehäuserohr (4), welches aus zumindest zwei Rohren (10, 12) zusammengesetzt ist, die durch eine Rohrverbindung nach Anspruch 12 miteinander verbunden sind.

15. Verfahren zur Stabilisierung einer Rohrverbindung, bei der ein erstes Rohr (10) in ein zweites Rohr (12) gesteckt ist, welches einen Einführtrichter (20) aufweist, mit Hilfe eines Stabilisatorelementes (22) nach einem der Ansprüche 1 bis 11, wobei separate Ringsegmente um das erste Rohr (10) gelegt und anschließend miteinander zu einem geschlossenen Klemmring (24) verbunden werden, und wobei der Klemmring (24) anschließend in axialer Richtung in einen Klemmsitz im Zwischenraum zwischen dem ersten Rohr (10) und dem Einführtrichter (20) geschoben wird.

16. Verfahren nach Anspruch 15, wobei am Klemmring (24) angebrachte Rastelemente (30) beim Verschieben des Klemmrings (24) in den Klemmsitz in zugehörige Rastaufnahmen im Einführtrichter (20) oder in einem den Einführtrichter (20) übergreifenden Aufsatz (26) einrasten, wodurch der Klemmring (24) im Klemmsitz fixiert wird.

## Claims

1. A stabilizer element (22) for a pipe connection, in which a first pipe (10) is inserted into a second pipe (12) that has an insertion funnel (20),
**characterized in that**
the stabilizer element (22) has a clamping ring (24) with several tensioners (48) distributed around its circumference, which in the final assembly position engage in an intermediate space between the first pipe (10) and the insertion funnel (20) and tension the first pipe (10) and the second pipe (12) against one another, and the clamping ring (24) is composed of several mutually connectable ring segments, in particular of two half shells (34).

2. A stabilizer element (22) according to Claim 1, wherein the adjacent ring segments of the clamping ring (24) have mutually complementary projections and/or recesses on their connecting surfaces to enable self-centering assembly of the clamping ring (24).

3. A stabilizer element (22) according to Claim 1 or 2, wherein locking of adjacent ring segments of the clamping ring (24) is provided using spring-loaded locking pins (38).

4. A stabilizer element (22) according to one of the Claims 1 to 3, wherein the clamping ring (24) has several snapping elements (30) distributed over its circumference, which engage in associated snap notches in the insertion funnel (20) in the final assembly position.

5. A stabilizer element (22) according to one of the Claims 1 to 3, which also has a circular attachment (26) that, in the final assembly position, is supported against the second pipe (12) and the insertion funnel (20), and at least partly overlaps the clamping ring (24), where the attachment (26) is composed of several mutually connectable ring segments, in particular of two half shells (44).

6. A stabilizer element (22) according to Claim 5, wherein the adjacent ring segments of the attachment (26) have mutually complementary projections and/or recesses on their connecting surfaces to enable self-centering assembly of the attachment (26).

7. A stabilizer element (22) according to Claim 5 or 6, wherein locking of adjacent ring segments of the attachment (26) is provided using spring-loaded locking pins (42).

8. A stabilizer element (22) according to one of the Claims 5 to 7, wherein the clamping ring (24) has several snapping elements (30) distributed over its circumference, which engage in the associated snap notches in the attachment (26) at final assembly position.

9. A stabilizer element (22) according to Claim 8, wherein the snap notches are designed as a circumferential ring groove (52) in the attachment (26).

10. A stabilizer element (22) according to Claim 8 or 9, wherein the respective snapping element (30) is designed as a flexure bearing.

11. A stabilizer element (22) according to one of the Claims 1 to 10, wherein the respective tensioner (48) is designed as wedge-shaped or has a wedge-shaped upper part (80).

12. A pipe connection, wherein a first pipe (10) is inserted into a second pipe (12) that has an insertion funnel (20), and wherein the connection area is stabilized by a stabilizer element (22) according to one of the Claims 1 to 11.

13. A pipe connection according to Claim 12, wherein the first pipe (10) and the second pipe (12) are components of a core flow measurement housing tube (4) for a nuclear power plant (60).

14. A nuclear power plant (60) with a reactor pressure vessel (2) and with a core flow measurement housing tube (4) located in the reactor pressure vessel (2), which is assembled from at least two pipes (10, 12) that are connected to each other by a pipe connection according to Claim 12.

15. A process for stabilizing a pipe connection wherein a first pipe (10) is inserted into a second pipe (12) that has an insertion funnel (20) using a stabilizer element (22) according to one of the Claims 1 to 11, wherein separate ring segments are placed around the first pipe (10) and then connected with each other to a closed clamping ring (24) and wherein the clamping ring (24) is then shifted in the axial direction into a clamping seat in the interim space between the first pipe (10) and the insertion funnel (20).

16. A process according to Claim 15, wherein snapping elements (30) attached to the clamping ring (24) snap into the clamping seat in the associated snap notches in the insertion funnel (20) or in an attachment (26) overlapping the insertion funnel (20), by which the clamping ring (24) is fastened in the clamping seat.

## Revendications

1. Elément stabilisateur (22) pour un raccord de tuyaux, pour lequel un premier tuyau (10) est enfiché dans un deuxième tuyau (12), lequel présente un entonnoir d'introduction (20),
**caractérisé en ce que**
l'élément stabilisateur (22) présente une bague de serrage (24) avec une pluralité de corps de serrage (48) répartis sur sa périphérie, lesquels s'engagent dans la position finale de montage dans un espace intermédiaire entre le premier tuyau (10) et l'entonnoir d'introduction (20) et serrent le premier tuyau (10) et le deuxième tuyau (12) l'un contre l'autre, et la bague de serrage (24) est composée de plusieurs segments annulaires pouvant être reliés entre eux, en particulier de deux demi-coques (34).

2. Elément stabilisateur (22) selon la revendication 1, dans lequel des segments annulaires voisins de la bague de serrage (24) présentent sur leurs surfaces de liaison des saillies et/ou retraits complémentaires les uns des autres, qui permettent un assemblage à centrage automatique de la bague de serrage (24).

3. Elément stabilisateur (22) selon la revendication 1 ou 2, dans lequel un verrouillage de segments annulaires voisins de la bague de serrage (24) est prévu au moyen de goupilles de verrouillage (38) sollicitées par ressort.

4. Elément stabilisateur (22) selon l'une quelconque des revendications 1 à 3, dans lequel la bague de serrage (24) présente une pluralité d'éléments d'encliquetage (30) répartis sur sa périphérie, qui, dans la position finale de montage, s'engagent dans des logements d'encliquetage associés dans l'entonnoir d'introduction (20).

5. Elément stabilisateur (22) selon l'une quelconque des revendications 1 à 3, lequel présente en outre un chapeau (26) annulaire, qui s'appuie sur le deuxième tuyau (12) dans la position finale de montage et recouvre au moins partiellement l'entonnoir d'introduction (20) et la bague de serrage (24), dans lequel le chapeau (26) est composé de plusieurs segments annulaires pouvant être reliés entre eux, en particulier de deux demi-coques (44).

6. Elément stabilisateur (22) selon la revendication 5, dans lequel des segments annulaires voisins du chapeau (26) présentent sur leurs surfaces de liaison des saillies et/ou retraits complémentaires les uns des autres, qui permettent un assemblage à centrage automatique du chapeau (26).

7. Elément stabilisateur (22) selon la revendication 5 ou 6, dans lequel un verrouillage de segments annulaires voisins du chapeau (26) au moyen de goupilles de verrouillage (42) sollicitées par ressort est prévu.

8. Elément stabilisateur (22) selon l'une quelconque des revendications 5 à 7, dans lequel la bague de serrage (24) présente une pluralité d'éléments d'encliquetage (30) répartis sur sa périphérie, qui, dans la position finale de montage, s'engagent dans des logements d'encliquetage associés dans le chapeau (26).

9. Elément de stabilisateur (22) selon la revendication 8, dans lequel les logements d'encliquetage sont réalisés sous la forme d'une rainure annulaire périphérique (52) dans le chapeau (26).

10. Elément stabilisateur (22) selon la revendication 8 ou 9, dans lequel l'élément d'encliquetage (30) respectif est réalisé sous la forme d'une articulation à corps solide.

11. Elément stabilisateur (22) selon l'une quelconque des revendications 1 à 10, dans lequel le corps de serrage (48) respectif est réalisé en forme de coin ou présente une partie supérieure (80) en forme de coin.

12. Raccord de tuyaux, pour lequel un premier tuyau (10) est enfiché dans un deuxième tuyau (12), lequel présente un entonnoir d'introduction (20), et dans lequel la zone de raccordement est stabilisée par un élément stabilisateur (22) selon l'une quelconque des revendications 1 à 11.

13. Raccord de tuyaux selon la revendication 12, pour lequel le premier tuyau (10) et le deuxième tuyau (12) font partie d'un tuyau de boîtier de mesure de flux nucléaire (4) pour une centrale nucléaire (60).

14. Centrale nucléaire (60) avec une cuve de pression de réacteur (2) et avec un tuyau de boîtier de mesure de flux nucléaire (4) disposé dans la cuve de pression de réacteur (2), lequel est composé d'au moins deux tuyaux (10, 12), qui sont reliés entre eux par un raccord de tuyaux selon la revendication 12.

15. Procédé de stabilisation d'un raccord de tuyaux, selon lequel un premier tuyau (10) est enfiché dans un deuxième tuyau (12), lequel présente un entonnoir d'introduction (20), à l'aide d'un élément stabilisateur (22) selon l'une quelconque des revendications 1 à 11, dans lequel des segments annulaires séparés sont placés autour du premier tuyau (10) et ensuite reliés les uns aux autres en une bague de serrage (24) fermée, et dans lequel la bague de serrage (24) est ensuite poussée dans la direction axiale dans un siège de serrage dans l'espace intermédiaire entre le premier tuyau (10) et l'entonnoir d'introduction (20).

16. Procédé selon la revendication 15, dans lequel des éléments d'encliquetage (30) montés sur la bague de serrage (24) s'enclenchent, lors du déplacement de la bague de serrage (24) dans le siège de serrage, dans des logements d'encliquetage associés dans l'entonnoir d'introduction (20) ou dans un chapeau (26) recouvrant l'entonnoir d'introduction (20), moyennant quoi la bague de serrage (24) est fixée dans le siège de serrage.
